# FASCICULE DE BREVET EUROPEEN

(11) **EP 4 353 472 B1**
(45) Date de publication et mention de la délivrance du brevet: **16.07.2025**
(21) Numéro de dépôt: 23203296.1
(22) Date de dépôt: 12.10.2023
(51) Int. Cl.: B32B 5/02, B32B 5/26

(54) **MATÉRIAU MULTICOUCHES SOUPLE RÉSISTANT À L'EXPLOSION D'UNE BATTERIE ÉLECTRIQUE**
EXPLOSIONSBESTÄNDIGES FLEXIBLES MEHRSCHICHTMATERIAL FÜR EINE ELEKTRISCHE BATTERIE
FLEXIBLE MULTILAYER MATERIAL RESISTANT TO EXPLOSION OF AN ELECTRIC BATTERY

(30) Priorité: 13.10.2022 FR 2210558
(43) Date de publication de la demande: 17.04.2024
(73) Titulaire: Jehier, 49120 Chemillé-en-Anjou (FR)
(72) Inventeur: OGRETEN, Dogan, 49190 Rochefort-sur-Loire (FR); DAUDE, Adrien, 49510 Beaupréau-en-Mauges (FR); HUILLET, Cédric, 49100 Angers (FR); DOUANEAU, Paul, 49540 Aubigné-sur-Layon (FR)
(74) Mandataire: Gevers & Orès

(56) Documents cités:
- EP-A1- 2 322 710
- WO-A1-2019/212549
- US-A1- 2006 115 656
- US-A1- 2021 013 460

## Description

### Domaine Technique

L'invention concerne le domaine des batteries électriques.

L'invention concerne plus précisément un matériau multicouches susceptible de servir de bouclier mécanique et thermique pour une application aux batteries électriques.

### Art Antérieur

De nombreux domaines requièrent l'utilisation d'une protection mécanique et thermique.

En particulier, la protection des batteries (voir par exemple US2021/013460A1) spécialement des batteries lithium-ion, est à l'heure actuelle un enjeu majeur pour la sécurité et la fiabilité des véhicules de transports électriques ou hybrides, quel que soit le secteur concerné (automobile, en particuliers les véhicules légers, les poids lourds, les bus ou cars, aéronautique, ferroviaire, naval, etc).

En effet, les batteries de véhicules électriques peuvent, sous certaines conditions, subir un phénomène d'emballement thermique incontrôlable menant à l'explosion de la batterie en quelques secondes.

Cette explosion, outre un effet de souffle, s'accompagne d'une projection de particules ayant une température susceptible de dépasser les 1500°C. On parle de phénomène de « blast » selon la terminologie anglo-saxonne.

C'est pourquoi on place des boucliers mécaniques et thermiques sur et/ou autour de l'ensemble constituant la batterie, afin de confiner le souffle de l'explosion et la projection de particules chaudes.

La plupart des boucliers existants actuellement sont à base de plaques de mica.

Ces plaques de mica permettent effectivement de garantir l'intégrité mécanique et thermique du bouclier et en conséquence de protéger tout ce qui est autour.

Toutefois, les plaques de mica sont mécaniquement rigides.

Ainsi, en particulier lorsque la batterie a une forme complexe ou présentant de nombreuses courbes ou zones angulaires, le bouclier est formé par découpe des plaques de mica en morceaux de dimensions adaptées qui sont ensuite assemblés sur les différents creux et reliefs de la batterie et joints ensemble.

Outre que le fait que ce processus d'adaptation du bouclier en plaques découpées de mica à la forme de la batterie est consommateur de temps, il y peut y avoir des zones de faiblesse sur le plan de la protection mécanique et thermique au niveau des jonctions entre chaque plaque de mica.

Dans le but d'éviter la présence de zones de faiblesse, il a déjà été proposé de fabriquer un moule à la forme de la batterie qui est ensuite utilisé pour former un bouclier d'un matériau composite comportant des plaquettes de mica noyées dans une résine. Le durcissement de la résine permet de former le boucler rigide de mica.

La fabrication du bouclier reste cependant consommatrice de temps et surtout, un moule dédié doit être fabriqué pour chaque forme de batterie.

Par ailleurs, on connaît aussi des matériaux multicouches pour la protection thermique. Ces matériaux multicouches présentent l'avantage d'être flexibles et donc adaptables à toutes formes, que ce soit pour des objets ou des personnes.

Un matériau multicouches typiquement employé à cet effet est formé d'un tissu de silice revêtu sur au moins une de ses faces d'une résine de silicone réticulée.

On pourra par exemple se référer au document KR102349628B1 qui décrit un bouclier anti-feu comprenant un matériau multicouches comprenant un tissu de silice revêtu d'une couche de résine de silicone avec, optionnellement, des retardateurs d'inflammation, tels que des particules d'hydroxyde d'alumine, d'hydroxyde de magnésium, de silice, à base de phosphore, de céramique ou de mélanges de ceux-ci. Cependant, ce matériau multicouches ne résiste pas aux conditions mécanique et thermique très contraignantes d'un phénomène de « blast » de batterie électrique.

Un objectif de l'invention est de résoudre l'un au moins des inconvénients précités.

En particulier, un objectif de l'invention est de proposer une solution susceptible de former un bouclier mécanique et thermique capable de résister au phénomène de « blast » d'une batterie électrique, capable de s'adapter à toute géométrie de batterie sans autre difficulté

### Résumé de l'invention

Pour atteindre l'un au moins de ces objectifs, l'invention propose un matériau multicouches comprenant n unités de base avec n un entier naturel non nul, une unité de base consistant en un stratifié comprenant dans l'ordre :
- une couche en résine de silicone réticulée comprenant des particules de graphite expansible d'une température supérieure à une température de réticulation de ladite résine ;
- une couche en tissu ou tricot de silice ou d'alumine, le tissu ou tricot étant muni d'interstices tous imprégnés d'une résine de silicone réticulée comprenant des particules de graphite expansible à partir d'une température supérieure à une température de réticulation de ladite résine,
dans lequel :
- le nombre n d'unités de base est compris entre 1 et 5 inclus,
- la n^{ème} unité de base étant revêtue d'une autre couche en résine de silicone réticulée comprenant des particules de graphite expansible à partir d'une température supérieure à une température de réticulation de ladite résine, de sorte à former un stratifié formé d'une alternance d'une couche de résine et d'une couche de tissu ou tricot.

L'invention pourra comprendre l'une au moins des caractéristiques suivantes, prise seule ou en combinaison :
- l'épaisseur de l'unité de base est comprise entre 900 et 1150 µm ;
- le nombre n d'unités de base est compris entre 1 et 3 inclus, et vaut de préférence 2 ou 3 ;
- le matériau multicouches a une épaisseur totale comprise entre 1100 et 5950 µm ;
- le matériau multicouches comporte un nombre n = 2 d'unités de base, pour une épaisseur totale comprise entre 2000 et 2500 µm ;
- le matériau multicouches comporte un nombre n= 3 d'unités de base, pour une épaisseur totale de 2900 et 3650 µm ;
- la résine de silicone comprend une charge additionnelle choisie dans le groupe constitué de fibres courtes de silice ou d'alumine, de particules de silice pyrogénée, de particules d'hydroxyde de magnésium, de la vermiculite, de particules d'argile, de particules d'oxyde de titane, de particules de carbure de silicium ou des mélanges de deux ou plus de ceux-ci ;
- la résine de silicone, réticulée ou non, comprend de 5 à 15% en masse, par rapport à la masse totale de la résine, de particules de graphite expansible et comprend de 4 à 7% en masse, par rapport à la masse totale de la résine, de silice pyrogénée ;
- les particules de graphite expansible ont leur plus grande dimension comprise entre 80 et 110 µm, de préférence une plus grande dimension de 90 µm ;

### Brève description des figures

la [Fig. 1] représente un matériau multicouches conforme à l'invention, selon un exemple de réalisation ;
la [Fig. 2] représente un matériau multicouches conforme à l'invention, selon un autre exemple de réalisation ;
la [Fig. 3] représente les différentes étapes d'un procédé de fabrication envisageable pour obtenir le matériau multicouches de la figure 1 ;
la [Fig. 4] représente les différentes étapes d'un procédé de fabrication envisageable pour obtenir le matériau multicouches de la figure 2 ;
la [Fig. 5] est un schéma d'une installation expérimentale adaptée pour tester le comportement du matériau multicouches de la revendication 1 à un test de « blast » d'une batterie électrique.

### Description détaillée

L'invention propose un matériau multicouches comprenant n unités de base avec n un entier naturel non nul, une unité de base consistant en un stratifié comprenant dans l'ordre :
- une couche en résine de silicone réticulée comprenant des particules de graphite expansible à partir d'une température supérieure à une température de réticulation de ladite résine;
- une couche en tissu ou tricot de silice ou d'alumine, le tissu ou tricot étant muni d'interstices tous imprégnés d'une résine de silicone réticulée comprenant des particules de graphite expansible à partir d'une température supérieure à une température de réticulation de ladite résine,
dans lequel :
- le nombre n d'unités de base est compris entre 1 et 5 inclus,
- la n^{ème} unité de base étant revêtue d'une autre couche en résine de silicone réticulée comprenant des particules de graphite expansible à partir d'une température supérieure à une température de réticulation de ladite résine, de sorte à former un stratifié formé d'une alternance d'une couche de résine et d'une couche de tissu ou tricot.

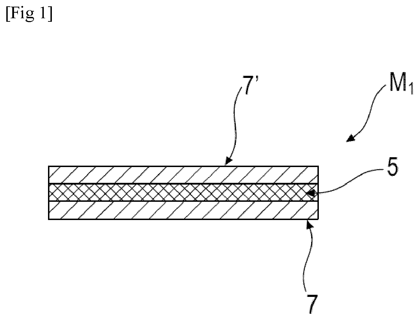

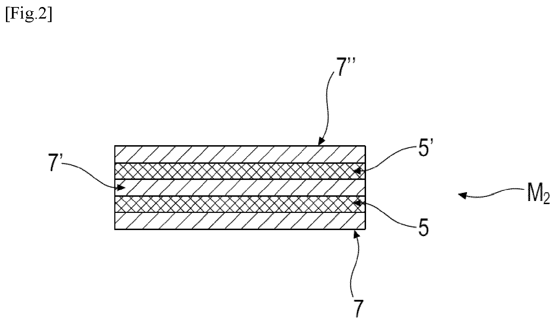

On a représenté sur la figure 1 un exemple de matériau M₁ multicouches selon l'invention, prévoyant une unité de base (n=1). De manière analogue, on a représenté sur la figure 2 un exemple de matériau M₂ multicouches selon l'invention, prévoyant deux unités de base (n = 2).

Une couche 5, 5' en tissu de silice ou d'alumine présente typiquement une épaisseur comprise entre 420 et 460 µm. Le tissu est formé à partir de fibres de silice ou d'alumine formées en fils tissés, par exemple avec un tissage de type toile (« plain weave » en anglais).

Un exemple de tissu de silice utilisé pour former le matériau multicouches de l'invention est un tissu de silice commercialisé sous la référence Valmiera^{®} Glass, KA-300. On pourra se référer à la fiche technique de ce produit pour connaître l'ensemble des caractéristiques de ce tissu. Toutefois, ce tissu de silice présente les caractéristiques principales suivantes : tissu constitué de fils en 34x6 (chaine/trame) ou 68x3 (chaine/trame) avec des filaments de 6 µm de diamètre, tissage de type toile avec une longueur de plume entière de 5 à 8 mm, traité thermiquement avec une finition aminosilane, résistance en tension dans le sens chaîne : supérieur ou égal à 700N/25mm et dans le sens trame : supérieur ou égal à 600N/25mm, poids de base de 300g/m², épaisseur de l'ordre de 440 µm.

Un exemple de tissu d'alumine susceptible d'être utilisé pour former le matériau multicouches de l'invention est un tissu d'alumine commercialisé par la société 3M, sous la référence Nextel^{®} 440.

L'utilisation d'un tissu de silice ou d'alumine procure une grande flexibilité, tout en participant aux exigences de tenue mécanique et thermique à un test de « blast » de batterie électrique.

Les interstices de ce tissu sont tous imprégnés par de la résine de silicone réticulée.

En conséquence, les particules de graphite expansible sont présentes dans tous les interstices du tissu de silice ou d'alumine, et pas seulement dans une partie de ces interstices.

Pour obtenir une imprégnation du tissu de silice ou d'alumine dans tous ses interstices, une résine de silicone non réticulée liquide est donc utilisée lors de la fabrication.

Par « résine liquide », on entend une résine ayant une viscosité apparente comprise entre 20 et 35 Pa.s.

On peut notamment mesurer cette viscosité par le procédé Brookfield (NF EN ISO 2555 - Plastiques - Résines à l'état liquide ou en émulsions ou dispersions - Détermination de la viscosité apparente par la méthode du viscosimètre rotatif de type à un cylindre) avec les conditions de mise en œuvre suivantes :

**[Tableau 1]**

| Référence mobile | S06 |
|---|---|
| Vitesse de rotation du cylindre (tr/mn) | 20 |
| Température de l'échantillon (°C) | 24.7 |
| Volume de l'échantillon (mL) | 400 |

De manière générale, pour réaliser la résine de silicone non réticulée, liquide, on peut prévoir la composition suivante :
- diméthyl-siloxane: 65 à 75 parties en masse,
- Vinyl siloxane : 0 à 7 parties en masse (optionnel)
- Méthyl hydrogénosiloxane : 15 à 25 parties en masse
- Charge additionnelle : 0 à 10 parties en masse (optionnel)
- Catalyseur Platine : 0,3 à 1 partie en masse
- Graphite expansible : 4 à 14 parties en masse

Optionnellement, la résine de silicone peut donc contenir une ou plusieurs charges additionnelles choisies dans le groupe constitué de fibres courtes (à savoir des fibres ayant une longueur inférieure ou égale à 6 mm) de silice ou d'alumine, de particules de silice pyrogénée, de particules d'hydroxyde de magnésium, de la vermiculite, de particules d'argile telle que la montmorillonite, de particules d'oxyde de titane, de particules de carbure de silicium (SiC) et des mélanges de deux ou plus de ceux-ci. Ainsi et par exemple, la résine de silicone, réticulée ou non, pourra notamment comprendre :
- de 5 à 15% et en particulier entre 5% et 10% en masse, par rapport à la masse totale de la résine, de particules de graphite expansé, et
- de 4% et 7% en masse, par rapport à la masse totale de la résine, de silice pyrogénée. Lors de la fabrication, les monomères de diméthyl-siloxane, de méthylhydrogénosiloxane et, lorsque cela est prévu, de vinylsiloxane, réticulent.

Les particules de graphite expansible ont la propriété de résister à des températures bien supérieures à 1500°C, en l'absence d'oxygène, ce qui est le cas lorsqu'elles sont noyées dans la résine de silicone réticulée.

Comme elles sont intégrées dans la résine de silicone, qui imprègne le tissu de silice à cœur, elles vont, lors de leur expansion, se mêler intimement aux fibres de silice et former, avec ces fibres de silice, une véritable barrière intégrale d'un matériau résistant à au moins 1500°C en renforçant par ailleurs la résistance mécanique du tissu de silice. Pour cela, il faut bien entendu que les particules de graphite soient dans un état non expansé dans la silicone réticulée ; autrement dit que la température de réticulation de la résine de silicone soit inférieure à la température à laquelle les particules de graphite commencent à s'expanser. Une légère expansion peut être tolérée, si bien qu'il faut comprendre cette température à laquelle les particules de graphite commencent à s'expanser comme une température à partir de laquelle on observe une expansion forte et rapide des particules de graphite.

Typiquement, les particules de graphite expansible ont la propriété de commencer à s'expanser (augmentation de volume) fortement et rapidement à partir d'une température qui peut être comprise entre 160°C et 220°C, parfois au-delà. Il convient donc de choisir une résine de silicone dont la température de réticulation est adaptée. De préférence, les particules de graphite expansible sont des particules ayant leur plus grande dimension comprise entre 80 et 110 µm car cela permet une répartition plus homogène des particules dans la résine de silicone. Un exemple de particules de graphite expansible utilisables dans l'invention sont les particules de graphite commercialisées par la Société NEOGRAF^{®} Solutions sous la marque GrafGuard^{®}, grade 210-200N (le premier nombre, à savoir 210 désigne la température critique à partir de laquelle le graphite commence à s'expandre, soit 210°C et le deuxième nombre, à savoir 200, est une référence, désignant des particules qualifiées de petites tailles, à savoir dans la gamme allant de 80 à 110 µm).

On comprend que plus le nombre n d'unités de base du matériau multicouches augmente et plus la résistance au phénomène de « blast » d'une batterie électrique augmente.

Cependant, plus le nombre n d'unités de base du matériau multicouches augmente et plus on perd aussi en flexibilité. En effet, bien que le tissu apporte une grande flexibilité, l'épaisseur totale et de fait la quantité de résine réticulée employée ont un impact sur cette flexibilité.

Pour cette raison, il est préférable que le nombre n d'unités de base ne soit pas supérieur à 5.

Lorsque qu'un enveloppement très intime de la batterie est recherché, il est préférable que le nombre d'unité de base n soit compris entre 1 et 3. Et lorsqu'en plus, on souhaite aussi une résistance au phénomène de « blast » d'une batterie électrique encore améliorée, il est alors préférable de choisir n = 2 ou 3 unités de base.

Tous les commentaires faits précédemment sur la résine de silicone concernent non seulement la résine imprégnée dans le tissu de silice, mais aussi la résine susceptible d'être employée pour former les autres couches.

Il est par ailleurs avantageux que la résine de silicone employée soit la même pour toute la fabrication du matériau multicouches. Cela facilite la fabrication. Il est cependant tout à fait possible d'avoir des compositions différentes à condition, bien entendu, qu'à l'état non réticulé, ces résines soient liquides pour imprégner tous les interstices du tissu de silice ou d'alumine.

En fonction du nombre d'unités de base, compris entre 1 et 5, et des choix effectués pour chaque couche (épaisseur du tissu, quantité de résine déposée) de couches du matériau multicouches, ce dernier aura une épaisseur totale typiquement comprise entre 1100 et 5950 µm.

Enfin, il convient de noter que l'on peut remplacer le tissu par un tricot, donc mettre en œuvre un tricot de silice ou d'alumine.

### Exemple n°1 de réalisation de l'invention

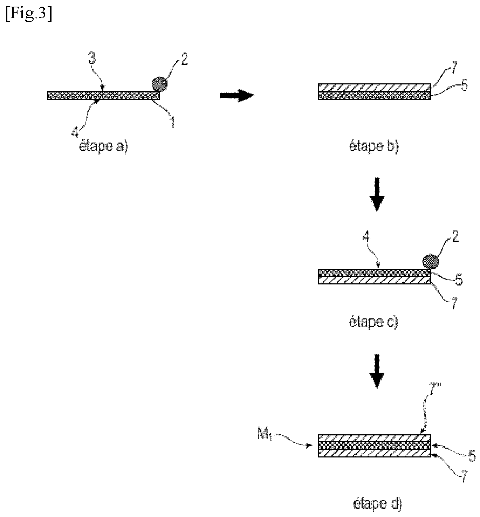

Nous allons maintenant décrire, à l'appui de la figure 3, un procédé de fabrication d'un matériau multicouches selon l'invention, et plus précisément du matériau multicouches représenté sur la figure 1 (n =1 unité de base).

Le tissu utilisé est un tissu de silice commercialisé sous la référence Valmiera^{®} Glass KA-300, dont les principales propriétés ont été fournies précédemment. Le tissu 1 est visible en figure 2, étape a).

Ce tissu est ensuite imprégné par enduction avec 350 g/m² de la résine de silicone non réticulée sur la face 3, exposée au rouleau 2 d'enduction, du tissu 1 (la face 4 du tissu 1 n'est quant à elle pas exposée au rouleau 2 d'enduction). Le positionnement du rouleau d'enduction avant l'enduction proprement dite est représenté sur la figure 2, étape a). Pour réaliser la résine de silicone non réticulée, liquide, on prévoit la composition suivante :
- diméthyl-siloxane: 69 parties en masse,
- Vinyl siloxane : 6 parties en masse,
- Méthyl hydrogénosiloxane : 20 parties en masse,
- Silice pyrogénée : 4.5 parties en masse,
- Catalyseur Platine : 0.5 partie en masse,
- Graphite expansible : 7 parties en masse.

Aucun solvant ou diluant n'est utilisé.

La viscosité a été mesurée par le procédé Brookfield dans les conditions précisées précédemment, mais rappelées ci-dessous :

**[Tableau 2]**

| Référence mobile | S06 |
|---|---|
| Vitesse de rotation du cylindre (tr/mn) | 20 |
| Température de l'échantillon (°C) | 24.7 |
| Volume de l'échantillon (mL) | 400 |

La quantité de résine de silicone déposée permet d'imprégner le tissu 5, dans tous ses interstices, et par ailleurs de former dans le même temps, une couche 7 de résine de silicone dépassant du tissu.

L'ensemble ainsi obtenu est passé dans un four à 200°C, pour réticuler la résine. La résine ne présente pas de retrait lors de sa réticulation. La figure 2, étape b) représente le tissu 5 imprégné de la résine de silicone réticulée, avec au-dessus la couche 7 de résine de silicone.

La figure 2, étape b) représente donc une unité de base du matériau multicouches.

Cette unité de base est alors retournée prête à être enduite. C'est ce qui est représenté sur la figure 2, étape c).

On réalise ensuite une enduction de la même résine de silicone non réticulée sur la face 4 opposée de la couche 5 de tissu de l'unité de base, à raison de 700g/m². A ce stade, on obtient un ensemble aves les couches 7, 5 et 7".

L'ensemble ainsi obtenu est à nouveau passé dans le four à 200°C pour réticuler toute la résine de silicone non réticulée. On aboutit au matériau M₁ multicouches souhaité, comme cela est représenté sur la figure 2, étape d). Le matériau M₁ multicouches se présente sous la forme d'un stratifié formé d'une alternance d'une couche de résine et d'une couche de tissu.

Le matériau M₁ multicouches finalement obtenu (n=1 unité de base) présente une épaisseur totale comprise entre 1100 et 1350µm.

### Exemple n° 2 de réalisation de l'invention

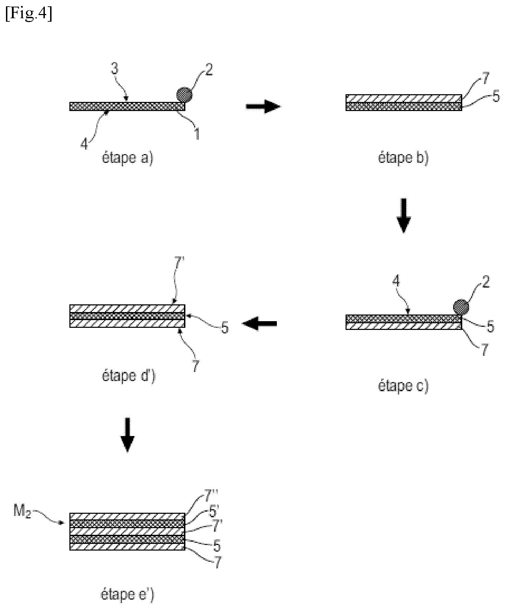

Ici, les étapes a), b) et c) de la figure 4 (n=2 unités de base) reprennent les étapes a), b) et c) de la figure 3 (n= 1 unité de base).

Ensuite, on prévoit des étapes additionnelles.

Ainsi, on réalise une enduction de la même résine de silicone non réticulée sur la face 4 opposée du tissu 5, à raison de 700g/m². Aucune réticulation n'est cependant effectuée. On se retrouve alors avec l'ensemble représenté sur la figure 4, étape d').

On récupère ensuite une partie de l'ensemble obtenu à l'étape b).

Ce dernier est alors apposé sur la couche 7' de l'ensemble obtenu à l'étape b). L'ensemble ainsi obtenu est à nouveau passé dans le four à 200°C pour réticuler toute la résine de silicone non réticulée.

On obtient alors le matériau M₂ multicouches représenté en figure 4, étape e') constitué, en partant du bas vers le haut :
- d'une première unité de base formée d'une couche 7 de résine réticulée revêtue d'un tissu 5 de silice imprégné de résine de silicone réticulée ;
- une deuxième unité de base formée d'une couche 7' de résine réticulée revêtue d'un tissu 5' de silice imprégné de résine de silicone réticulée ; et
- une autre couche 7" de résine réticulée.

Le matériau M₂ multicouches se présente sous la forme d'un stratifié formé d'une alternance d'une couche de résine et d'une couche de tissu.

Ce matériau multicouches (n = 2 unités de base) présente une épaisseur totale comprise entre 2000 et 2500 µm.

### Autres exemples de réalisation de l'invention

Il convient de noter que pour fabriquer un matériau multicouches comportant n = 3, 4 ou encore 5 unités de base, il convient alors de répéter autant de fois que nécessaire, à savoir 1, 2 ou 3 fois de suite, les étapes additionnelles décrites à l'appui de l'exemple n° 2 de réalisation de l'invention.

Typiquement, un matériau multicouches selon l'invention avec n = 3 unités de base présentera une épaisseur totale comprise entre 2900 et 3650 µm.

Typiquement, un matériau multicouches selon l'invention avec n = 4 unités de base présentera une épaisseur totale comprise entre 3800 et 4800 µm.

Typiquement, un matériau multicouches selon l'invention avec n = 5 unités de base présentera une épaisseur totale comprise entre 4700 et 5950 µm.

### Test de blast

Un « test de blast » est, dans le présent texte, un test mené dans des conditions extrêmes qui reproduisent les conditions les pires qui pourraient se produire lors de l'explosion d'une batterie Li-ion, c'est-à-dire une projection de particules en fusion à une température de 1500°C.

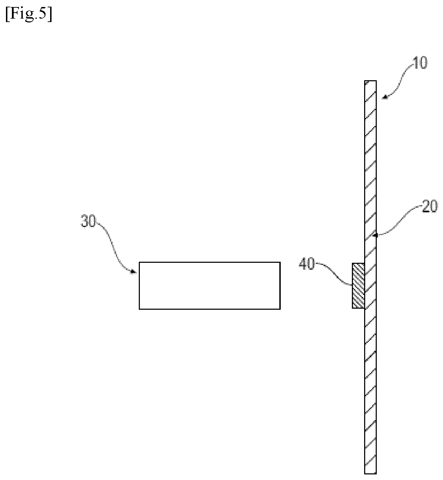

Un schéma simplifié de l'installation expérimentale employée pour réaliser le « test de blast » fait l'objet de la figure 5.

Comme on le voit en figure 3, un échantillon 20 de 250 mm x250 mm du matériau à tester est placé dans un cadre 10 en aluminium EN AW-5182. Un système 30 de projection des particules est placé à une distance de 30 mm (distance d'impact) et centré sur le zone d'impact 40 voulue pour reproduire le phénomène de « blast ». Le système 30 de projection de particules est une fusée pyrotechnique dont les caractéristiques sont les suivantes : distance d'effet comprise entre 4 et 5m, portée latérale comprise entre 1,5 à 2,5m, niveau de pression acoustique de 94dB (AImax) à 3m, et comportant des particules susceptibles de former des particules incandescentes à 1500°C. Le niveau de pression acoustique permet de rendre compte de la vitesse des particules à 3m, et donc indirectement de cette vitesse à la distance d'impact (30mm).

Le système de projection 1 de particules est démarré. La durée de la projection des particules incandescentes est limitée à 20 secondes, durée au bout de laquelle le système s'arrête automatiquement si l'échantillon n'est pas perforé avant.

Si l'échantillon est perforé avant la durée de projection de 20 secondes, on note le temps auquel la perforation a lieu. Dans ce cas, l'échantillon est considéré comme n'ayant pas atteint la résistance au « blast » voulue.

Si au bout des 20 secondes l'échantillon n'est pas perforé, l'échantillon est considéré comme ayant atteint la résistance au « blast » voulue.

### Résultats du test de blast

Le matériau multicouches représenté sur la figure 1 (n= 1 unité de base) a fait l'objet d'un « test de blast », passé avec succès. De plus, il s'avère suffisamment flexible pour épouser les formes mêmes complexes ou courbes de la batterie électrique.

Le matériau multicouches représenté sur la figure 2 (n= 2 unités de base) a également fait l'objet d'un « test de blast », passé avec succès. De plus, il s'avère suffisamment flexible pour épouser les formes mêmes complexes ou courbes de la batterie électrique. D'autres matériaux ont été testés, à titre d'exemples comparatifs (exemples comparatifs 1 à 5).

### Exemple comparatif 1

On a fabriqué un matériau multicouches en procédant comme dans « l'exemple n°1 de réalisation de l'invention » (une seule unité de base), mais en utilisant une résine de silicone qui ne contient pas de particules de graphite expansible.

La seule différence par rapport à l'exemple n°1 de réalisation est donc l'absence de particules de graphite.

Le test de blast a été un échec.

### Exemple comparatif 2

On a fabriqué un matériau multicouches en procédant comme dans « l'exemple n°2 de réalisation de l'invention » (deux unités de base), mais en utilisant une résine de silicone qui ne contient pas de particules de graphite expansible.

La seule différence par rapport à l'exemple n°2 de réalisation est donc l'absence de particules de graphite.

Le test de blast a été un échec.

### Exemple comparatif 3

On a fabriqué un matériau multicouches en reprenant l'un des « autres exemples de réalisation de l'invention » (trois unités de base), en utilisant une résine de silicone qui ne contient pas de particules de graphite expansible.

Là également, le test de blast a été un échec.

### Exemple comparatif 4

On a considéré un matériau multicouches de l'art antérieur constitué d'une plaque de mica de type « Mica board Vonroll shield T18^{®} » commercialisée par la société VonRoll.

Le test de blast a été un échec.

De plus, cette plaque est trop rigide pour épouser les formes complexes ou courbes d'une batterie électrique, sans effectuer de découpages ou appliquer une méthode faisant intervenir un moule.

### Exemple comparatif 5

On a considéré ici un matériau multicouches de l'art antérieur constitué de deux plaques de mica, chacune de type « Mica board Vonroll shield T18^{®} » commercialisé par la société VonRoll.

Le test de blast a été passé avec succès.

Toutefois, cet ensemble de deux plaques est bien entendu trop rigide pour épouser les formes complexes ou courbes d'une batterie électrique, sans effectuer de découpages ou appliquer une méthode faisant intervenir un moule.

Les exemples comparatifs 1 à 3 montrent bien l'intérêt de la présence de particules de graphite expansé dans la résine de silicone, par ailleurs avec une présence homogène, en particulier dans toute l'épaisseur du tissu de silice. Sans cela, le test de blast ne peut être passé avec succès.

De plus, si le matériau multicouches selon l'invention passe le test de blast avec succès déjà avec une unité de base et que son comportement ne peut que s'améliorer avec des unités de base additionnelles, on voit aussi que l'augmentation du nombre d'unités de base dans les exemples comparatifs ne permet pas pour autant de passer le test de blast avec succès.

Quant à la solution plaque de mica, on voit qu'une épaisseur minimum reste nécessaire pour passer le test de blast avec succès.

## Revendications

1. Matériau multicouches comprenant n unités de base avec n un entier naturel non nul, une unité de base B consistant en un stratifié comprenant dans l'ordre :
- une couche (7) en résine de silicone réticulée comprenant des particules de graphite expansible à partir d'une température supérieure à une température de réticulation de ladite résine,
- une couche (5) en tissu ou tricot de silice ou d'alumine imprégné, le tissu ou tricot étant muni d'interstices tous imprégnés d'une résine de silicone réticulée comprenant des particules de graphite expansible à partir d'une température supérieure à une température de réticulation de ladite résine,
dans lequel :
- le nombre n d'unités de base est compris entre 1 et 5 inclus,
- la n^{ème} unité de base étant recouverte d'une autre couche (7') en résine de silicone réticulée comprenant aussi des particules de graphite expansible à partir d'une température supérieure à une température de réticulation de ladite résine, de sorte à former un stratifié formé d'une alternance d'une couche de résine et d'une couche de tissu ou tricot.

2. Matériau multicouches selon la revendication 1, dans lequel l'épaisseur de l'unité de base est comprise entre 900 et 1150 µm.

3. Matériau multicouches selon l'une quelconque des revendications précédentes dans lequel le nombre n d'unités de base est compris entre 1 et 3 inclus, et vaut de préférence 2 ou 3.

4. Matériau multicouches selon la revendication précédente, ayant une épaisseur totale comprise entre 1100 et 5950 µm.

5. Matériau multicouches selon l'une quelconque des revendications précédentes, comportant un nombre n = 2 d'unités de base pour une épaisseur totale comprise entre 2000 et 2500 µm.

6. Matériau multicouches selon l'une quelconque des revendications précédentes, comportant un nombre n= 3 unités de base pour une épaisseur totale de 2900 et 3650 µm.

7. Matériau multicouches selon l'une quelconque des revendications précédentes, dans lequel la résine de silicone comprend une charge additionnelle choisie dans le groupe constitué de fibres courtes de silice ou d'alumine, de particules de silice pyrogénée, de particules d'hydroxyde de magnésium, de la vermiculite, de particules d'argile, de particules d'oxyde de titane, de particules de carbure de silicium (SiC) et des mélanges de deux ou plus de ceux-ci.

8. Matériau multicouches selon l'une quelconque des revendications précédentes, dans lequel la résine de silicone, réticulée ou non, comprend :
- 5 à 15% en masse, par rapport à la masse totale de la résine, de particules de graphite expansé, et
- 4 à 7% en masse, par rapport à la masse totale de la résine, de silice pyrogénée.

9. Matériau multicouches selon l'une quelconque des revendications précédentes dans lequel les particules de graphite expansible ont leur plus grande dimension comprise entre 80 et 110 µm, de préférence une plus grande dimension de 90 µm.

## Patentansprüche

1. Mehrschichtmaterial, umfassend n Basiseinheiten, wobei n eine natürliche Zahl ungleich Null ist, wobei eine Basiseinheit B aus einem Laminat besteht, das in der folgenden Reihenfolge umfasst:
- eine Schicht (7) aus vernetztem Silikonharz, umfassend Teilchen aus Graphit, der ab einer Temperatur oberhalb einer Vernetzungstemperatur des Harzes expandierbar sind,
- eine Schicht (5) aus imprägniertem Siliziumdioxid- oder Aluminiumoxidgewebe oder -gestrick, wobei das Gewebe oder Gestrick mit Zwischenräumen versehen ist, die alle mit einem vernetzten Silikonharz imprägniert sind, das Teilchen aus Graphit umfasst, der ab einer Temperatur oberhalb einer Vernetzungstemperatur des Harzes expandierbar sind,
wobei:
- die Anzahl n der Basiseinheiten zwischen 1 und 5 liegt,
- wobei die n-^{te} Basiseinheit mit einer weiteren Schicht (7') aus vernetztem Silikonharz bedeckt ist, das ebenfalls Teilchen aus Graphit umfasst, der ab einer Temperatur oberhalb einer Vernetzungstemperatur des Harzes expandierbar sind, so dass ein Laminat gebildet wird, das aus einer sich abwechselnden Abfolge von einer Harzschicht und einer Gewebe- oder Gestrickschicht besteht.

2. Mehrschichtmaterial nach Anspruch 1, wobei die Dicke der Basiseinheit zwischen 900 und 1150 µm liegt.

3. Mehrschichtmaterial nach einem der vorstehenden Ansprüche, wobei die Anzahl n der Basiseinheiten zwischen 1 und einschließlich 3 liegt und vorzugsweise 2 oder 3 beträgt.

4. Mehrschichtmaterial nach dem vorstehenden Anspruch, das eine Gesamtdicke zwischen 1100 und 5950 µm aufweist.

5. Mehrschichtmaterial nach einem der vorstehenden Ansprüche, das eine Anzahl n = 2 Basiseinheiten bei einer Gesamtdicke zwischen 2000 und 2500 µm aufweist.

6. Mehrschichtmaterial nach einem der vorstehenden Ansprüche, das eine Anzahl n = 3 Basiseinheiten bei einer Gesamtdicke von 2900 und 3650 µm aufweist.

7. Mehrschichtmaterial nach einem der vorstehenden Ansprüche, wobei das Silikonharz einen zusätzlichen Füllstoff umfasst, der aus der Gruppe ausgewählt ist, die aus kurzen Siliciumdioxid- oder Aluminiumoxidfasern, pyrogenen Siliciumdioxidpartikeln, Magnesiumhydroxidpartikeln, Vermiculit, Tonpartikeln, Titanoxidpartikeln, Siliziumcarbidpartikeln (SiC) und Gemischen aus zwei oder mehr davon besteht.

8. Mehrschichtmaterial nach einem der vorstehenden Ansprüche, wobei das vernetzte oder nicht vernetzte Silikonharz umfasst:
- 5 bis 15 Masse-%, bezogen auf die Gesamtmasse des Harzes, an Teilchen aus expandiertem Graphit, und
- 4 bis 7 Masse-%, bezogen auf die Gesamtmasse des Harzes, an geglühtem Siliziumdioxid.

9. Mehrschichtmaterial nach einem der vorstehenden Ansprüche, wobei die Teilchen aus expandierbarem Graphit eine größte Abmessung zwischen 80 und 110 µm, vorzugsweise eine größte Abmessung von 90 µm, aufweisen.

## Claims

1. Multilayer material comprising n base units with n a natural, non-zero integer, a base unit B consisting of a laminate comprising, in order:
- a cross-linked silicone resin layer (7) comprising graphite particles expandable from a temperature greater than a cross-linking temperature of said resin,
- an impregnated silica or alumina fabric or knit layer (5), the fabric or knit being provided with gaps, all impregnated with a cross-linked silicone resin, comprising graphite particles expandable from a temperature greater than a cross-linking temperature of said resin,
wherein:
- the number n of base units is between 1 and 5 inclusive,
- the n^{th} base unit being covered with another cross-linked silicone resin layer (7'), also comprising graphite particles expandable from a temperature greater than a cross-linking temperature of said resin, so as to form a laminate formed of an alternating resin layer and a fabric or knit layer.

2. Multilayer material according to claim 1, wherein the thickness of the base unit is between 900 and 1150µm.

3. Multilayer material according to any one of the preceding claims, wherein the number n of base units is between 1 and 3 inclusive, and is preferably 2 or 3.

4. Multilayer material according to the preceding claim, having a total thickness of between 1100 and 5950µm.

5. Multilayer material according to any one of the preceding claims, comprising a number n = 2 base units for a total thickness of between 2000 and 2500µm.

6. Multilayer material according to any one of the preceding claims, comprising a number n = 3 base units for a total thickness of between 2900 and 3650µm.

7. Multilayer material according to any one of the preceding claims, wherein the silicone resin comprises an additional load chosen from the group constituted of short silica or alumina fibres, of pyrogenic silica particles, of magnesium hydroxide particles, or vermiculite, of clay particles, of titanium oxide particles, of silicon carbide (SiC) particles, and mixtures of two or more of these.

8. Multilayer material according to any one of the preceding claims, wherein the silicone resin, cross-linked or not, comprises:
- 5 to 15% by mass, with respect to the total mass of the resin, of expanded graphite particles, and
- 4 to 7% by mass, with respect to the total mass of the resin, of pyrogenic silica.

9. Multilayer material according to any one of the preceding claims, wherein the expandable graphite particles have their largest dimension of between 80 and 110µm, preferably a larger dimension of 90µm.
